# FASCICULE DE BREVET EUROPEEN

(11) **EP 0 429 358 B1**
(45) Date de publication et mention de la délivrance du brevet: **20.07.1994**
(21) Numéro de dépôt: 90403282.8
(22) Date de dépôt: 21.11.1990
(51) Int. Cl.: H04N 5/91, G11B 20/10

(54) **Procédé de multiplexage d'un signal de séquences sonores dans un signal d'image vidéo destiné à être enregistré sur un vidéodisque et système de restitution associé**
Verfahren zum Multiplexieren eines Tonfolge-Signals in einem Bildsignal zur Aufzeichnung auf einer Videoplatte und ein zugehöriges Wiedergabesystem
Method for multiplexing a tone sequence signal in a video picture signal for its recording on a videodisc and associated reproducing system

(30) Priorité: 21.11.1989 FR 8915251
(43) Date de publication de la demande: 29.05.1991
(73) Titulaire: FRANCE TELECOM, 75015 Paris (FR); TELEDIFFUSION DE FRANCE S.A., 75015 Paris (FR)
(72) Inventeur: Charbonnel, Pierre, F-35830 Betton (FR); Thepaut, Bernard, F-35740 Pace (FR)
(74) Mandataire: Rodhain, Claude

(56) Documents cités:
- WO-A-87/03732
- DE-A- 2 038 093
- DE-A- 3 644 383
- FR-A- 2 505 593
- US-A- 3 789 137
- US-A- 4 608 456
- US-A- 4 703 369
- US-A- 4 816 926
- US-A- 4 816 928
- US-A- 4 851 931
- IEEE TRANSACTIONS ON CONSUMER ELECTRONICS, vol. CE-22, no. 4, novembre 1976, pages 327-337, New York, US; G.C. KENNEY: "Special purpose applications of the optical videodisc system"

## Description

Le domaine de l'invention est celui des procédés d'enregistrement de signaux de séquences sonores et des supports d'enregistrement vidéo.

Plus particulièrement l'invention concerne un procédé de multiplexage d'un signal de séquences sonores dans un signal d'image vidéo destiné à être enregistré sur un vidéodisque et un système de restitution associé.

Les signaux de séquences sonores sont habituellement enregistrés soit sur des supports analogiques du type bande magnétique, soit sur des supports numériques du type disque optique numérique, compact disque audio, compact disque-rom...

Ces différents supports d'enregistrement de signaux de séquences sonores présentent selon leur type des inconvénients spécifiques et plus particulièrement lorsqu'ils doivent être utilisés dans des applications interactives où l'on désire accéder directement à chaque séquences sonores.

En effet, les informations mémorisées sur les supports d'enregistrement analogiques sont accédées séquentiellement et par conséquent ce type de support n'est pas du tout adapté aux applications interactives.

Les supports d'enregistrement numériques permettent l'accès direct à l'information sonore mais font appel à des standards de communication non compatibles. Par ailleurs ces dispositifs connus ont des temps d'accès trop importants pour être utilisés dans des applications interactives.

On connait aussi des supports d'enregistrement du type vidéodisque dans lesquels le signal sonore est modulé dans le signal d'image. Cependant, ces supports tels qu'ils sont utilisés ne permettent pas une grande capacité d'enregistrement sonore (inférieure à 30 minutes).

On connaît également du brevet français FR-2 107 044 (NIXDORF) un dispositif pour la reproduction d'informations dans lequel l'image et le son sont enregistrés sur le même support, le son étant analogique.

En conséquence, l'objectif de l'invention est de permettre l'enregistrement d'un signal numérique de séquences sonores de longue durée, chaque séquence sonore enregistrée pouvant être accessible directement.

Un second objectif de l'invention est d'utiliser un support d'enregistrement compatible avec les standards de télévision.

Un troisième objectif de l'invention est d'utiliser pour l'enregistrement du son, un support multimédia permettant indifféremment d'enregistrer du son, des images, des logiciels...

Un quatrième objectif de l'invention est d'utiliser un support d'enregistrement du son permettant un accès rapide de l'information sonore pour une utilisation dans des applications interactives du type enseignement assisté par ordinateur par exemple.

Ces objectifs ainsi que d'autres sont atteints à l'aide d'un procédé de multiplexage d'un signal de séquences sonores dans un signal d'image vidéo destiné à être enregistré sur un vidéodisque caractérisé tel que défini dans la revendication 1.

Grâce au fait qu'on utilise un support d'enregistrement du type vidéodisque, on pourra aisément placer chaque séquence sonore dont la durée est nécessairement limitée, sur l'emplacement physique destiné à une ou plusieurs images vidéo et en utilisant les fonctionnalités intrinsèques du vidéolecteur on pourra accéder directement à chaque séquence sonore de façon analogue à l'accès image.

Ce type de support d'enregistrement permet par ailleurs indifféremment l'enregistrement de séquences sonores selon l'invention, de séquences d'images animées, d'images fixes, mais aussi toutes données codées en binaire du type programme d'ordinateur.

L'échantillonnage du signal de séquences sonores à une fréquence multiple égale, ou sous-multiple de la fréquence ligne vidéo permet de tenir compte de la qualité sonore désirée, faciliter l'insertion des échantillons sonores dans le signal d'image vidéo et surtout leur restitution car on conserve une grande compatibilité en substituant aux éléments d'images vidéo, des échantillons sonores.

L'insertion des échantillons numériques sonores dans le signal d'image vidéo a une fréquence d'insertion prédéterminée étant réalisée par modulation d'amplitude par impulsion, on utilise ainsi au maximum la dynamique d'amplitude et la bande passante du signal vidéo (signal modulant).

En décalant les échantillons temporellement dans le signal d'image vidéo au moment de leur insertion, on adapte la fréquence de restitution du signal de séquences sonores à la fréquence de restitution du signal vidéo. Cette décompression temporelle du signal basse fréquence permet de s'affranchir d'une mémoire tampon importante lors de la restitution du signal de séquences sonores.

L'invention concerne aussi un nouveau système de restitution d'un signal de séquences sonores enregistré sur un vidéodisque tel que défini dans les revendications 2 et 3.

Grâce au moyen de commande du vidéolecteur, on peut notamment boucler sur une pluralité de séquences sonores sans perte du rythme vidéo, rechercher directement une séquence sonore par son adresse préalablement mémorisée dans les moyens de commande.

Le circuit échantillonneur bloqueur prélève dans le signal d'image vidéo à une fréquence pixel, les échantillons sonores analogiques multiplexés par modulation d'amplitude d'impulsion pour les fournir au convertisseur analogique numérique qui les quantifie pour engendrer des échantillons sonores numériques. Ces deux circuits pourront indistinctement décoder soit des échantillons sonores analogiques, soit des éléments d'image du type pixel.

La mémoire tampon permet de lisser le signal de séquences sonores restitué en éliminant les discontinuités dans la suite des échantillons sonores numériques dues aux lignes de suppression de trame. Ce lissage est obtenu par l'utilisation d'une mémoire tampon écrite et lue à des fréquences différentes.

D'autres caractéristiques et avantages de l'invention apparaîtront encore plus clairement à la lecture de la description qui va suivre et des dessins annexés dans lesquels :
- la figure 1a représente de façon schématique un signal analogique échantillonné d'une séquence sonore ;
- la figure 1b représente de façon schématique l'expression binaire de codage de l'amplitude des échantillons analogiques sonores de la figure 1a ;
- la figure 1c représente de façon schématique le signal de séquences sonores multiplexé par modulation d'amplitude d'impulsion dans le signal d'image vidéo ;
- la figure 2 est une représentation possible sous forme d'une matrice initiale d'un fichier d'échantillons sonores numériques ;
- la figure 3 est une représentation sous forme d'une matrice du fichier d'échantillons sonores numériques préparé pour l'insertion dans le signal d'image vidéo ;
- la figure 4 représente de façon schématique un système d'enregistrement d'un signal de séquences sonores selon l'invention ;
- la figure 5 représente de façon schématique un système de restitution d'un signal de séquences sonores enregistré sur un vidéodisque selon l'invention ;
- la figure 5b représente de façon schématique un vidéodisque et une piste du vidéodisque ;
- la figure 6 représente de façon schématique la répartition des échantillons numériques sonores dans le signal vidéo selon d'autres modes de réalisation du procédé selon l'invention.

Le signal analogique de séquences sonores 10 est codé numériquement au format G721 du CCITT (codage qualité téléphonique) pour obtenir une suite d'échantillons numériques sonores codés E′_{0.0}, E′_{0.1}..., chaque échantillon numérique sonore étant exprimé sur un mot de quatre éléments binaires pour ce codage.

De façon connue, ce codage inclut une étape d'échantillonnage du signal analogique de séquences sonores et une phase de compression de débit. De façon préférentielle, la fréquence d'échantillonnage (Fe) est multiple ou sous-multiple de la fréquence ligne (Fl) du signal vidéo (15625 hertz), par exemple une fréquence moitié de la fréquence ligne soit 7812,5 hertz dans le cas du codage ADPCM 4 bits.

Bien entendu on pourra choisir un codage différent selon la qualité sonore que l'on désire restituer et adapter en conséquence la fréquence d'échantillonnage du signal de séquences sonores.

Ainsi pour un codage du son qualité moyenne, chaque échantillons sera exprimé sur 8 bits ; pour un codage du son haute qualité, chaque échantillons sera codé sur 12 bits. La fréquence d'échantillonnage dans les cas précités sera respectivement Fl, 2 Fl. Pour ce type de codage, l'échantillon numérique sera scindé en autant de mots de 4 bits que nécessaire pour s'adapter à la dynamique d'amplitude du signal vidéo. Pour des codages du son exprimant les échantillons numériques sonores sur des mots de longueur non multiplier de 4, par exemple 6 bits, il est préférable de découper le mot de codage en quartés binaires en commançant par les poids faibles de sorte que les poids forts seront rassemblés dans un quarté binaire partiellement utilisé.

Nous nous limiterons dans la description qui va suivre à un codage 4 bits.

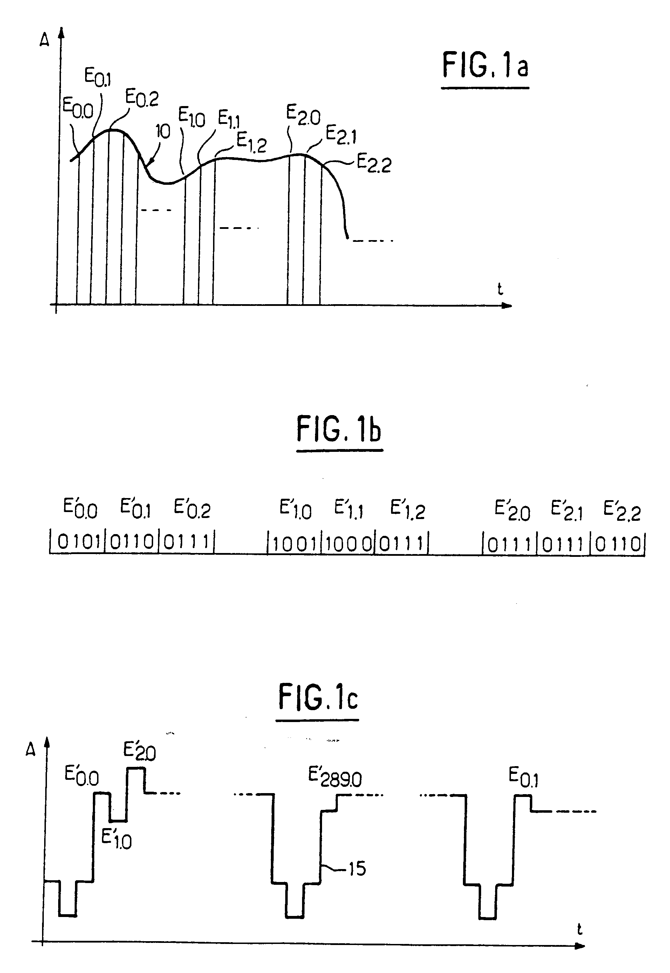

L'étape d'échantillonnage du signal analogique de séquences sonores à la fréquence Fe est représentée schématiquement sur la figure 1a, sur laquelle on a porté les instants d'échantillonnage correspondant respectivement à des échantillons analogiques E_{0.0}, E_{0.1}... qui seront utilisés lors de la phase de compression de débit. Le codage numérique du signal de séquences sonores peut être réalisé de façon connue par une carte électronique spécialisée du type ADPCM (Adaptative Pulse Code Modulation) préréglée à la fréquence Fe choisie. On pourra aussi utiliser des cartes électroniques distribuées dans le commerce telles que des cartes "RTI802" de chez "ANALOG DEVICES".

De telles cartes électroniques sont exploitées en liaison avec un appareil de traitement microprogrammable du type micro-ordinateur de façon que le résultat du codage, c'est-à-dire la suite d'échantillons numériques sonores codés, soit mémorisée dans un fichier de données sur un support mémoire du type disquette magnétique ou analogue.

Selon l'invention, on prévoit d'organiser la suite d'échantillons numériques sonores codés E′_{0.0}, E′_{0.1}... représentée en figure 1b en bloc d'échantillons numériques sonores, un bloc comportant 288 échantillons numériques sonores par ligne et 576 lignes. Cette disposition facilitera notablement l'insertion des échantillons sonores dans le signal vidéo.

Cette configuration est sensiblement analogue à celle d'une image vidéo numérique comportant 320 pixels par ligne d'image et 576 lignes de pixels dans laquelle la résolution choisie est sensiblement inférieure à la résolution ligne d'une image vidéo numérisée de façon à limiter les erreurs dûes aux performances du matériel d'enregistrement et de restitution du signal vidéo.

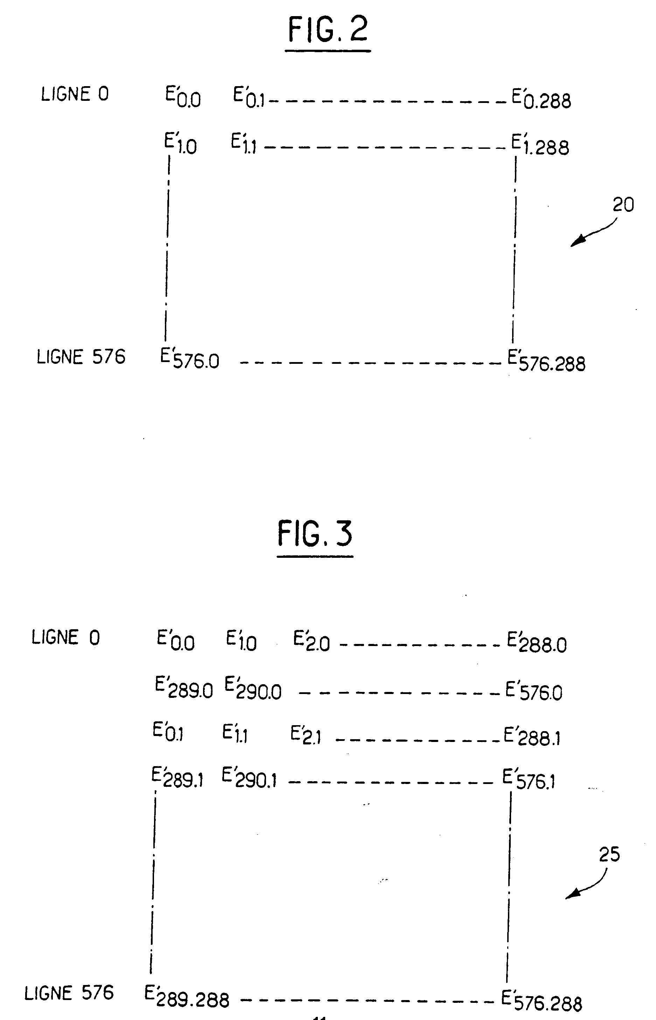

On a représenté en figure 2 une organisation sous forme matricielle d'un bloc initial d'échantillons numériques sonores 20 dans lequel chaque échantillon est représenté par la référence E et pour lequel on lui a affecté un numéro d'indice ligne et un numéro d'indice colonne. Cette organisation initiale de la suite d'échantillons servira à mieux comprendre l'insertion des échantillons dans le signal vidéo.

Le procédé selon l'invention prévoit d'insérer les échantillons sonores dans un signal vidéo analogique destiné à être enregistré sur un vidéo disque de manière telle que leur restitution, lors de la lecture du vidéodisque, s'affranchisse des problèmes de décompression de débit dus aux différences de bandes passantes entre le signal de séquences sonores et le signal vidéo.

Pour réaliser cette décompression, il est nécessaire de réorganiser le bloc d'échantillons numériques sonores 20 avant l'insertion de ceux-ci dans le signal analogique vidéo. Cette réorganisation consiste à permuter les échantillons numériques sonores du bloc de données 20 représenté en figure 2 afin d'obtenir un nouveau bloc de données 25 conforme à celui représenté en figure 3. La réorganisation du bloc de données initiales tient uniquement compte de la fréquence d'échantillonnage Fe du signal de séquences sonores et devra être adaptée en fonction de celle-ci.

Plus spécifiquement, le procédé selon l'invention prévoit d'insérer dans chaque intervalle de ligne utile du signal vidéo 288 échantillons analogiques sonores constitués après conversion numérique analogique de chaque échantillon numérique sonore codé E′i,j mémorisé dans le nouveau bloc de données 25.

Dans le cas d'une fréquence d'échantillonnage Fe = Fl/2, deux échantillons numériques sonores consécutifs, par exemple E′_{0.0}, E′_{0.1} sont insérés dans les intervalles de ligne utile du signal vidéo décalés d'une période de temps égale à deux fois la période de temps d'un intervalle de ligne vidéo, soit 128 microsecondes. Plus précisément, deux échantillons numériques sonores consécutifs dans une ligne du bloc de données 20 représenté en figure 2 sont insérés respectivement toutes les deux lignes du signal vidéo, comme visible en figure 1c. Pour bénéficier complètement de la capacité de stockage du signal vidéo, on organise préalablement à l'insertion, les échantillons numériques sonores selon la disposition du bloc de données 25 de 288 x 576 échantillons numériques sonores, représenté en figure 3. Cette organisation est réalisée de la manière suivante :

On répartit dans la première ligne du bloc final 25 les échantillons pris successivement de la première colonne du bloc initial 20 du premier échantillon au 288ème échantillon. On réparti sur la seconde ligne du bloc final 25 les échantillons pris successivement de la première colonne du bloc initial 20 à partir du 289ème échantillon jusqu'au 576 échantillon. On répète cette opération pour la seconde colonne du bloc initial 20 pour obtenir un bloc final 25 dans lequel deux échantillons successifs dans le bloc initial 20 sont séparés de deux lignes dans le bloc final 25. Bien entendu on pourra aussi construire le bloc final 25 à partir d'une suite d'échantillons numériques telle que représentée en figure 1b.

Le bloc final 25 d'échantillons numériques sonores est lu ligne par ligne à une fréquence d'insertion compatible avec la fréquence pixel, par exemple 6,25 mégahertz. Les échantillons sonores numériques tels qu'ils sont organisés dans le bloc final 25 sont envoyés en séquence, ligne par ligne à un convertisseur numérique analogique qui restitue, pour chaque échantillon numérique sonore appliqué à son entrée, un signal impulsionnel ou échantillon analogique codé, d'amplitude proportionnelle à la quantification du mot binaire correspondant à l'échantillon numérique sonore E′ᵢⱼ, la durée de l'amplitude étant sensiblement égale à 160 nanosecondes compatible par conséquent à la bande passante du signal vidéo.

Le signal impulsionnel est ensuite transmis à un codeur générateur de signal vidéo composite relié à un magnétoscope professionnel et enregistré sur une bande magnétique. On a représenté sur la figure 1c le signal vidéo enregistré sur la bande magnétique où l'on peut observer le décalage de deux intervalles de lignes vidéo entre deux échantillons numériques sonores consécutifs E_{0.0}, E_{0.1} issus de l'échantillonnage du signal de séquences sonores. Chaque ligne vidéo reçoit 288 échantillons analogiques codé chacun sur une période de 160 nanosecondes dont l'ordre d'insertion est défini par l'ordre des échantillons numériques sonores dans les lignes du bloc final 25 de la figure 3.

En conséquence la valeur quantifiée de chaque échantillon numérique sonore est codée dans le signal d'image vidéo sous la forme d'une amplitude avec 16 niveaux d'amplitudes différents. Sachant que l'on utilise de manière conventionnelle 80 nanosecondes pour le codage de données numériques sans bénéficier de la dynamique d'amplitude du signal vidéo, le codage selon l'invention exploite au maximum les capacités de stockage du signal vidéo. Ainsi si sur 52 microsecondes, on codait l'équivalent de 320 bits, le procédé selon l'invention permet le codage de 1280 bits soit l'équivalent de 160 octets.

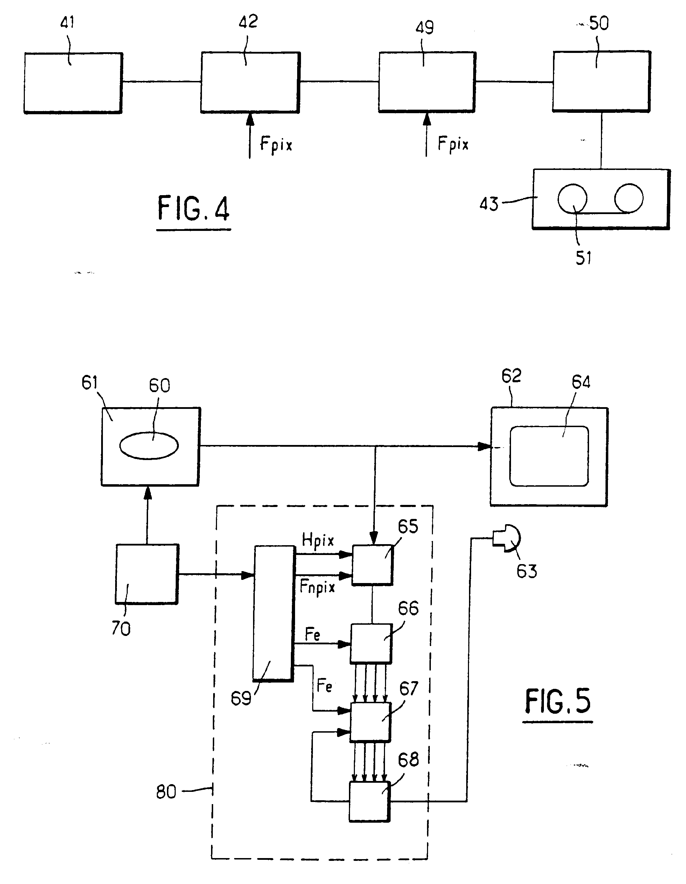

On a représenté de façon schématique sur la figure 4 un mode de réalisation du système d'enregistrement du signal de séquences sonores multiplexé dans un signal vidéo sur une bande magnétique mère. Le système comprend de façon préférentielle un micro-ordinateur 41 relié à des moyens de mémorisation 42 du type disquette mémoire vive ou analogue. Principalement, le micro-ordinateur 41 est chargé de réaliser l'acquisition des échantillons sonores numériques, leur mise en mémoire sous forme de bloc dans un ou plusieurs fichiers sur disquette par exemple et la réorganisation du ou des blocs d'échantillons numériques sonores.

Le bloc d'échantillons numériques sonores 25 après traitement est mis en place dans des registres mémoire à accès rapide, permettant une lecture à 6,25 mégahertz. Les moyens de mémorisation 42 sont reliés à un convertisseur numérique analogique 49 délivrant un signal impulsionnel à un codeur 50. Le codeur 50 est relié à un enregistreur 43 de bande magnétique 51 et multiplexe le signal impulsionnel issu de la conversion numérique analogique pour chaque échantillon numérique dans le signal vidéo synthétisé par le codeur à la fréquence d'insertion de 6,25 mégahertz. La fréquence d'insertion a été représentée par une flèche dans la figure 4 et commande l'accès en lecture des moyens de mémorisation 42 et la fréquence de conversion du convertisseur numérique analogique 49.

Le signal vidéo analogique selon le procédé ci-dessus décrit est enregistré sur une bande magnétique mère 51 pour être ensuite enregistré sur vidéodisque.

Dans le cas de l'invention, on utilise un vidéodisque du type "laser vision" de "Philips" dont chaque piste en mode vitesse angulaire constante peut enregistrer l'information d'une image vidéo soit 576 lignes d'image vidéo. Comme cela a été décrit précédemment, le procédé selon l'invention permet l'insertion de 288 x 576 échantillons sonores dans une partie de signal vidéo correspondant au codage d'une image vidéo.

Le signal sonore étant échantillonné à une fréquence de Fl/2 égale à 7815,5 hertz, et sachant que 8000 échantillons sonores représentent une seconde de son, il apparait donc qu'à une piste du vidéodisque correspond une capacité de stockage sonore de 21 secondes environ. Ainsi dans le cas d'un signal sonore codé selon la norme G721 du CCITT (qualité téléphonique), le vidéodisque a une capacité totale d'enregistrement sonore de 315 heures.

Les vidéolecteurs utilisant de tels vidéodisques permettent de façon habituelle :
- de lire séquentiellement les pistes du vidéodisque,
- de lire de manière permanente la même piste du vidéodisque,
- de lire de 1 à 50 pistes séquentiellement en boucle fermée avec retour instantané à la première piste de la boucle.

Le dispositif de lecture du vidéodisque selon l'invention utilise les deux derniers mode de lecture précédemment cités.

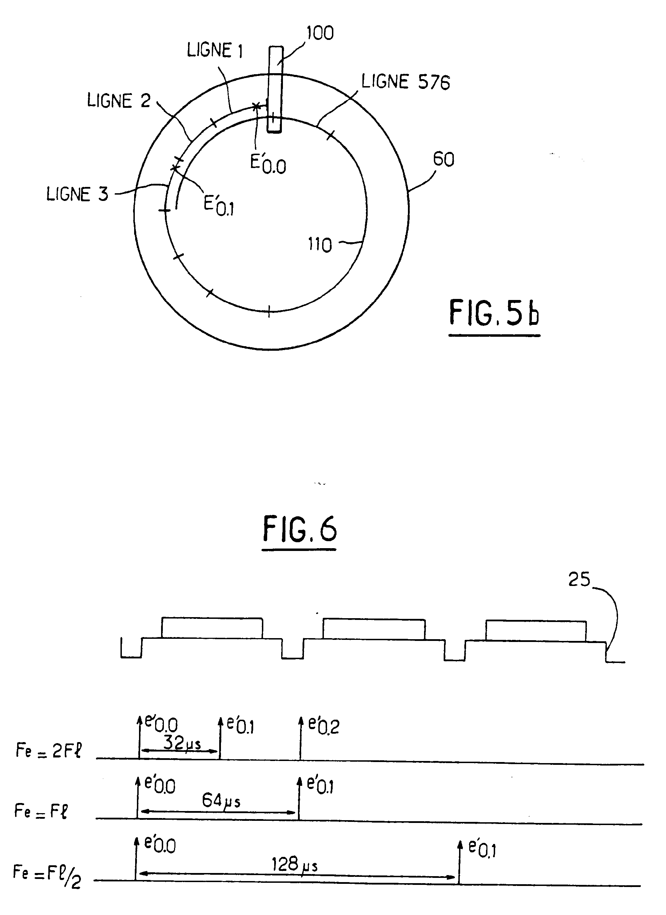

Comme visible sur la figure 5, le dispositif de restitution comprend un vidéolecteur 61 commandé par un dispositif de commande du type micro-ordinateur ou analogue 70 par une liaison série.

La sortie vidéo du vidéolecteur 61 est reliée à l'entrée d'un ensemble électronique de décodage du signal vidéo 80. L'ensemble électronique 80 restitue en sortie un signal analogique sonore qui est fourni à un organe de restitution du son 63.

De façon préférentielle, le vidéolecteur 61 est relié directement à l'entrée vidéo d'un appareil de télévision 62 par une liaison adaptée de manière à pouvoir restituer le cas échéant une image vidéo sur un écran 64 prévu à cet effet.

En effet, étant donné que les séquences sonores sont mémorisées sur des pistes contiguës du vidéodisque, il est facile pour l'homme de l'art de prévoir au moment de la constitution du signal vidéo à enregistrer sur la bande magnétique mère, que certaines parties du signal d'image vidéo seront affectées pour le codage d'éléments d'images et d'autres parties pour le codage d'éléments sonores, ces parties étant bien entendu distinctes. Ainsi certaines pistes du vidéodisque pourront être affectées pour l'enregistrement d'images vidéo, tandis que d'autres pistes peuvent être affectées pour l'enregistrement de séquences sonores. De façon préférentielle, on peut prévoir d'alterner le type d'information mémorisée sur chaque piste successives du vidéodisque de manière à disposer d'une ressource mémoire analogique vidéo-sonore comprenant une pluralité d'images fixes auxquelles sont associés une pluralité de commentaires sonores, chaque commentaire ayant une durée de 21 secondes par exemple. Chaque image fixe pourra avantageusement être codée sur la partie de piste correspondant à une trame d'image tandis que la partie de piste correspondant à la seconde trame d'image sera utilisée pour le codage d'une séquence sonore.

On voit donc que l'utilisation du vidéodisque selon l'invention permet un grand éventail d'applications. On pourra notamment prévoir d'insérer en plus des images et du son sur le vidéodisque des données informatiques du type instructions binaires codées.

Nous nous limiterons dans la description qui va suivre à un système de restitution de séquences sonores enregistrées sur le vidéodisque.

L'ensemble électronique 80 comprend un circuit échantillonneur bloqueur 65 relié en sortie à un convertisseur analogique numérique 66. Le circuit échantillonneur bloqueur 65 et le convertisseur analogique numérique 66 sont commandés par une base de temps 69 reliée au circuit de commande microprogrammable 70.

La base de temps 69 délivre au circuit échantillonneur bloqueur 65 deux signaux de synchronisation représentés par deux liaisons différentes Hpix, Fnpix.

Par le signal Hpix, on engendre 288 tops d'horloge par ligne de trame vidéo, la période entre chaque top étant de 160 nanosecondes.

Par le signal Fnpix, on crée une fenêtre de sélection d'échantillons permettant de sélectionner un échantillon parmi les 288 échantillons détectés par le signal Hpix. Le signal Fnpix est fonction du mode de codage du signal de séquences sonores (codage 4 bits, 8 bits, 12 bits...), du nombre de piste à lire consécutivement (de 1 à 50 pistes par exemple), de la fréquence d'échantillonnage du signal de séquences sonores (2 Fl, Fl, Fl/2).

De façon préférentielle, ces différents paramètres sont préalablement mémorisés dans des moyens de mémorisation (non représentés) du dispositif de commande 70 et servent de paramètre de fonctionnement pour la base de temps 69.

A partir du signal vidéo restitué par le lecteur de vidéodisque, l'échantillonneur bloqueur prélève toutes les 160 nanosecondes dans chaque intervalle de ligne utile du signal vidéo, 288 échantillons sur lesquels est appliquée la fenêtre de sélection.

Dans le cas d'un codage ADPCM 4 bits, avec une fréquence d'échantillonnage Fe = Fl/2, la lecture d'une piste du vidéodisque est effectuée de la manière suivante.

Une piste 110 du vidéodisque 60 représentée en figure 5bis comporte 576 portions de piste correspondant à chaque ligne d'image du signal vidéo pour une image. Sur deux portions différentes et consécutives espacées d'une portion sont portés quatre échantillons sonores enregistrés E′_{0.0}, E′_{0.01}, E′_{1.0}, E′_{1.1} selon le procédé de l'invention.

La tête de lecture 100 du vidéolecteur 61 se déplace radialement par rapport au vidéodisque pour lire chacune des 54000 pistes, le vidéodisque étant animé d'un mouvement en rotation à vitesse angulaire constante de 1500 tours par minute.

Le signal vidéo détecté par la tête de lecture 100 est échantillonné à raison de 288 échantillons par portion de piste, les instants d'échantillonnage étant donnés par le signal Hpix. Pour la première passe du vidéodisque devant la tête de lecture 100, la fenêtre de sélection est positionnée sur le premier échantillon prélevé sur chaque portion, une portion sur deux.

De cette manière, après une révolution complète du vidéodisque devant la tête de lecture 100, 288 échantillons sonores sont prélevés correspondant aux échantillons successifs de la ligne 1 du bloc d'échantillons de la figure 2, c'est-à-dire aux échantillons E′_{0.0}, E′_{0.1}, E′_{0.1}... E′_{0.288}.

Lors de la deuxième révolution du vidéodisque devant la tête de lecture 100, la fenêtre de sélection est décalée d'un échantillon pour le prélèvement de 288 échantillons sonores consécutifs correspondant aux échantillons successifs de la ligne 2 du bloc d'échantillons de la figure 2 c'est-à-dire aux échantillons E'_{1.0}, E'_{1.1},... E'_{1.288}. On répète cette opération jusqu'au prélèvement complet de tous les échantillons dans leur ordre successif tels qu'ils sont rangés dans le bloc d'échantillons de la figure 2.

De cette manière on prélève les échantillons sonores correspondant à une séquence sonore pour chaque piste successive du vidéodisque.

L'échantillonneur bloqueur 65 prélève donc l'échantillon désiré sur l'intervalle de ligne d'image considérée et les maintient durant 128 microsecondes, ce qui correspond à la période d'échantillonnage du signal de séquences sonores. Le convertisseur analogique numérique 66 commandé à une fréquence égale à la fréquence d'échantillonnage du signal de séquences sonores soit Fl/2 transforme le signal maintenu en un mot numérique de quatre éléments binaires qui est identique au mot de codage de l'échantillon numérique sonore inscrit dans le signal vidéo.

Etant donné qu'il faut tenir compte des impulsions supprimées pendant la suppression de trame dans le signal d'image vidéo, on utilise pour le système de restitution selon l'invention une mémoire temporaire 67 du type pile premier entré, premier sorti reliée au convertisseur analogique numérique 66 et capable de mémoriser environ 50 échantillons numériques de 4 bits, cette mémoire étant écrite à la fréquence d'échantillonnage et relue à une fréquence moindre de 7187, 50 hertz respectivement FL/2 et FL/2 x 575 / 625. Les différences de fréquence de lecture et d'écriture de la mémoire temporaire 67 permettent de lisser le "trou" correspondant aux lignes de suppression de trame. Les échantillons numériques sonores extraits de la mémoire 67 à la fréquence de 7187,50 hertz sont fournis à un décodeur ADPCM 68 comportant essentiellement un processeur TMS 320 et un cofidec 2913 Texas pilotés par un quartz à 3,68 mégahertz. Le décodeur 68 restitue en sortie un signal de séquences sonores qui est fourni au dispositif de restitution du son 63.

On a représenté en figure 6, d'autres modes de réalisation de l'invention, en ce qui concerne le procédé de multiplexage du signal de séquences sonores dans le signal vidéo. Dans le cas d'une fréquence d'échantillonnage du signal de séquences sonores égale à Fl, les échantillons successifs sont insérés dans le signal vidéo espacés d'une période de temps égale à un intervalle de ligne d'image vidéo. Dans le cas d'une fréquence d'échantillonnage du signal de séquences sonores égale à 2 Fl, les échantillons successifs sont insérés dans le signal vidéo espacés d'une période de temps égale à un demi intervalle de ligne d'image vidéo. Pour la restitution du signal de séquences sonores, lors de la lecture du vidéodisque, la fenêtre de sélection devra donc être adaptée pour prélever le nombre nécessaire d'échantillons par intervalle de ligne d'image vidéo selon le codage choisi préalablement.

Comme on vient de le voir, le système de restitution de séquences sonores ne nécessite aucune mémoire de grande capacité, à l'exception de la mémoire temporaire 67 dont la capacité de mémorisation est très limitée.

On pourra prévoir avantageusement pour le système de restitution selon l'invention une circuiterie adaptée et permettant d'une part de positionner la tête de lecture sur une piste prédéterminée du vidéodisque, et d'autre part effectuer le décodage des échantillons sonores sur cette piste ou boucler sur une pluralité de pistes (entre 1 et 50). Bien entendu on devra prévoir un programme spécifique permettant la commande du vidéolecteur 61 et de la base de temps 69 par l'intermédiaire du dispositif de commande 70.

Le procédé selon l'invention et le système de restitution associé pour l'enregistrement et la restitution d'un signal de séquences sonores trouve de nombreuses applications et notamment dans le cadre de diapothèques numériques sonorisées, d'appareils pour la sonorisation de banques d'images sources de serveur audiovisuel, d'appareils pour l'enseignement assisté par ordinateur. Par ailleurs certaines sources de serveur audiovisuel existantes fonctionnant déjà avec des vidéolecteurs tels que les points d'accès image utilisés en tête de réseau de vidéo-communication, il sera avantageux d'utiliser une telle mémoire de masse analogique comme périphérique d'ordinateur afin de réaliser des télévidéo audiothèques automatisées.

Bien entendu l'invention n'est pas limitée au mode de réalisation ci-dessus décrit et on pourra prévoir d'autres variantes sans pour cela sortir du cadre de l'invention.

## Revendications

1. Procédé de multiplexage d'un signal de séquences sonores (10) dans un signal d'image vidéo (15) destiné à être enregistré sur un vidéodisque, le signal de séquences sonores étant enregistré sur au moins une partie de piste du vidéodisque et le signal d'image vidéo étant enregistré sur au moins une autre partie de piste du vidéodisque, caractérisé en ce que :
a) on réalise un codage du signal de séquences sonores à multiplexer après échantillonage de ce signal à une fréquence ayant une valeur multiple, égale ou sous-multiple de la fréquence ligne du signal d'image vidéo, pour obtenir une suite d'échantillons numériques sonores,
b) on convertit sous forme analogique chaque échantillon numérique sonore par modulation d'amplitude d'impulsion,
c) on insère les échantillons analogiques obtenues lors de l'étape b) dans les intervalles de ligne utile du signal vidéo à une cadence d'insertion telle que deux échantillons analogiques sonores correspondant à deux échantillons numériques sonores consécutifs dans la suite d'échantillons numériques sonores, soient décalés dans le signal d'image vidéo d'une période de temps ayant respectivement ladite valeur sous-multiple, égale ou multiple de la période de temps d'un intervalle de ligne d'image vidéo selon que l'échantillonnage réalisé au cours de l'étape a) est effectué à une fréquence ayant ladite valeur respectivement multiple, égale ou sous-multiple de la fréquence ligne du signal d'image vidéo.

2. Système de restitution d'un signal analogique de séquences sonores enregistré sur un vidéodisque (60) par le procédé selon la revendication 1, caractérisé en ce qu'il comprend un vidéolecteur (61) pour la lecture du vidéodisque (60) commandé en lecture par des moyens de commande (70), un circuit échantillonneur bloqueur (65) relié à la sortie vidéo du vidéolecteur pour prélever au moins un échantillon analogique sonore multiplexé dans un intervalle de ligne d'image du signal d'image vidéo en fonction d'une fenêtre de sélection d'échantillons, un convertisseur analogique numérique (66) relié à la sortie du circuit échantillonneur bloqueur (65) pour fournir un échantillon sonore numérique à une fréquence d'échantillonnage ayant ladite valeur multiple égale ou sous-multiple de la fréquence ligne du signal d'image vidéo, des moyens de décodage (68) reliés à la sortie du convertisseur analogique numérique (66) pour décoder lesdits échantillons numériques sonores et fournir un signal analogique de séquences sonores.

3. Système selon la revendication 2 caractérisé en ce que le circuit échantillonneur-bloqueur (65) et le convertisseur analogique-numérique (66) sont commandés par une base de temps (69) reliée aux moyens de commande (70), la base de temps (69) fournissant d'une part un premier signal de synchronisation (Hpix) déterminant les instants d'échantillonnage et d'autre part un deuxième signal de synchronisation (Fnpix) définissant ladite fenêtre de sélection d'échantillons.

## Patentansprüche

1. Verfahren zum Multiplexen eines Tonfolgensignals (10) in ein Videobildsignal (15), das auf einer Videodisk aufgezeichnet werden soll, wobei das Tonfolgensignal auf mindestens einem Teil der Spur der Videodisk und das Videobildsignal auf mindestens einem anderen Teil der Spur der Videodisk aufgezeichnet wird,
dadurch **gekennzeichnet**, daß:
a) man eine Kodierung des zu multiplexenden Tonfolgensignals durchführt nach einer Sampelung dieses Signals mit einer Frequenz, deren Wert ein Vielfaches, gleich oder ein Bruchteil der Zeilenfrequenz des Videobildsignals ist, um eine Folge von digitalen Tonabtastwerten zu erhalten;
b) man jeden digitalen Tonabtastwert durch Impulsamplitudenmodulation in analoge Form umwandelt;
c) man die in Schritt b erhaltenen analogen Abtastwerte in die Nutzzeilenintervalle des Videosignals mit einem solchen Einfügungstakt einfügt, daß zwei analoge Tonabtastwerte, die zwei aufeinanderfolgenden digitalen Tonabtastwerten in der Folge der digitalen Tonabtastwerte entsprechen, in dem Videobildsignal um eine Zeitspanne auseinanderliegen, die der genannte Bruchteilswert gleich oder das genannte Vielfache der Zeitdauer eines Videobildzeilenintervalls ist, je nachdem die in Schritt a) durchgeführte Sampelung bei einer Frequenz durchgeführt wurde, die den genannten vielfachen, gleichen bzw. Bruchteilswert der Zeilenfrequenz des Videobildsignals hat.

2. System zur Wiederherstellung eines Analogsignals von Tonfolgen, das auf einer Videodisk (60) gemäß dem Verfahren nach Anspruch 1 aufgezeichnet wurde,
dadurch **gekennzeichnet**, daß es aufweist: ein Videoabspielgerät (61) für das Lesen der Videodisk (60), welches durch Steuermittel (70) im Lesebetrieb steuerbar ist, eine an den Videoausgang des Videoabspielgeräts angeschlossene Blockier-Abtastschaltung (65) zum Entnehmen mindestens eines analogen Tonabtastwertes, der in ein Bildzeilenintervall des Videobildsignals gemultiplext ist, in Funktion eines Abtastwählfensters, einen an den Ausgang der Blockier-Abtastschaltung (65) angeschlossenen Analog-Digitalwandler (66) zur Lieferung eines digitalen Tonabtastsignals mit einer Abtastfrequenz, die den genannten vielfachen, gleichen oder Bruchteilswert der Zeilenfrequenz des Videobildsignals hat, und Dekodiermittel (68), die an den Ausgang des Analog-Digitalwandlers (66) angeschlossen sind zum Dekodieren der digitalen Tonabtastwerte und Liefern eines analogen Tonfolgensignals.

3. System nach Anspruch 2,
dadurch **gekennzeichnet**, daß die Blockier-Abtastschaltung (65) und der Analog-Digitalwandler (66) durch eine Zeitbasis (69) gesteuert sind, die an die Steuermittel (70) angeschlossen ist, wobei die Zeitbasis (69) einerseits ein erstes Synchronisiersignal (Hpix), welches die Abtastzeitpunkte bestimmt, und andererseits ein zweites Synchronisiersignal (Fnpix), welches das Abstastwählfenster definiert, liefert.

## Claims

1. A multiplexing process for a tone sequence signal (10) in a video image signal (15) intended to be stored on a video disc, the tone sequence signal being stored on at least one portion of track of the video disc and the video image signal being stored on at least one other portion of track of the video disc, characterised in that:
a) the coding is carried out of the tone sequence signal to be multiplexed after sampling this signal at a frequency having a multiple value which is equal to or a sub-multiple of the line frequency of the video image signal in order to obtain a series of digital tone samples,
b) each digital tone sample is converted into analogue form by modulating the pulse amplitude,
c) the analogue samples obtained in stage b) are inserted in the intervals of the useful line of the video signal at a rate of insertion such that the two analogue tone samples, corresponding to two consecutive digital tone samples in the series of digital tone samples, are shifted in the video image signal from a period of time having respectively the said sub-multiple value, which is equal to or a multiple of the period of time of a video image line interval provided that the sampling carried out during stage a) is achieved at a frequency having the said respective multiple value, which is equal to or a sub-multiple of the line frequency of the video image signal.

2. A system for restoring an analogue signal of tone sequences stored on a video disc (60) by the process according to claim 1, characterised in that it comprises a video reader (61) for reading the videodisc (60) controlled during reading by the control means (70), an inhibit sampling circuit (65) connected to the video output of the video reader to take at least one multiplexed analogue tone sample in an interval of image line of the video image signal according to a sample selection window, an analogue-digital converter (66) connected to the output of the inhibit sampling circuit (65) to supply a digital tone sample at a sampling frequency having the said multiple value which is equal to or a sub-multiple of the line frequency of the video image signal, decoding means (68) connected to the output of the analogue-digital converter (66) in order to decode the said digital tone samples and to supply an analogue tone sequence signal.

3. A system according to claim 2 characterised in that the inhibit sampling circuit (65) and the analogue-digital converter (66) are controlled by a time base (69) connected to the control means (70), the time base (69) supplying on the one hand a first synchronisation signal (Hpix) determining the sampling times and on the other hand a second synchronisation signal (Fnpix) defining the said sample selection window.
